(19) Europäisches Patentamt
European Patent Office
Office européen des brevets

(11) **EP 1 640 596 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**07.09.2016 Patentblatt 2016/36**

(45) Hinweis auf die Patenterteilung:
**19.11.2008 Patentblatt 2008/47**

(21) Anmeldenummer: **04104585.7**

(22) Anmeldetag: **22.09.2004**

(51) Int Cl.:
***F02M 26/08*** (2016.01)        ***F02M 26/43*** (2016.01)
***F02B 37/013*** (2006.01)

(54) **Aufgeladene Brennkraftmaschine und Verfahren zum Betreiben einer derartigen Brennkraftmaschine**

Supercharged internal combustion engine and method for operating such an internal combustion engine

Moteur à combustion interne à suralimentation et procédé pour faire fonctionnner un tel moteur à combustion interne

(84) Benannte Vertragsstaaten:
**DE FR GB**

(43) Veröffentlichungstag der Anmeldung:
**29.03.2006 Patentblatt 2006/13**

(73) Patentinhaber: **Ford Global Technologies, LLC, A subsidary of Ford**
**Motor Company**
**Dearborn, MI 48126 (US)**

(72) Erfinder:
• **Schorn, Norbert**
  **52080, Aachen (DE)**
• **Kindl, Matthias**
  **52066, Aachen (DE)**
• **Spaeder, Uwe**
  **52066, Aachen (DE)**
• **Stalman, Rob**
  **52538, Selfkant (DE)**

(74) Vertreter: **Sevenich, Fabian Hubert**
**An Groß St. Martin 4**
**50667 Köln (DE)**

(56) Entgegenhaltungen:
**EP-A- 1 275 832        EP-A- 1 375 868**
**EP-A- 1 396 619        US-A- 6 079 211**
**US-A1- 2002 112 478    US-A1- 2002 116 926**

• **PATENT ABSTRACTS OF JAPAN Bd. 016, Nr. 173 (M-1240), 24. April 1992 (1992-04-24) & JP 04 017714 A (TOYOTA MOTOR CORP), 22. Januar 1992 (1992-01-22)**
• **PATENT ABSTRACTS OF JAPAN Bd. 011, Nr. 330 (M-636), 28. Oktober 1987 (1987-10-28) & JP 62 113828 A (NISSAN MOTOR CO LTD), 25. Mai 1987 (1987-05-25)**
• **PATENT ABSTRACTS OF JAPAN Bd. 014, Nr. 307 (M-0993), 3. Juli 1990 (1990-07-03) & JP 02 099723 A (TOYOTA MOTOR CORP), 11. April 1990 (1990-04-11)**

**Beschreibung**

Die Erfindung betrifft eine aufgeladene Brennkraftmaschine mit einer Gesamtansaugleitung zur Versorgung mit Frischluft bzw. Frischgemisch und einer Gesamtabgasleitung zur Abführung des Abgases und mit mindestens zwei in Reihe geschalteten Abgasturboladern, die jeweils eine in der Gesamtabgasleitung angeordnete Turbine und einen in der Gesamtansaugleitung angeordneten Verdichter umfassen und von denen ein erster Abgasturbolader als Niederdruckstufe dient und ein zweiter stromaufwärts der Gesamtabgasleitung bzw. stromabwärts der Gesamtansaugleitung des ersten Ab-gasturboladers angeordneter Abgasturbolader als Hoch-druckstufe dient, wobei

- die zweite Turbine des zweiten Abgasturboladers eine variable Turbinengeometrie aufweist
- eine erste Bypaßleitung vorgesehen ist, in der ein Absperrelement angeordnet ist und die stromaufwärts dieser zweiten Turbine von der Gesamtabgasleitung abzweigt und stromabwärts dieser zweiten Turbine wieder in die Gesamtabgasleitung mündet, und
- eine zweite Bypaßleitung vorgesehen ist, die stromaufwärts des zweiten Verdichters von der Ge-samtansaugleitung abzweigt und stromabwärts die-ses zweiten Verdichters wieder in die Gesamtansaugleitung mündet, wobei in dieserzweiten Bypassleitung ein Absperrelement angeordnet ist.

Des weiteren betrifft die Erfindung ein Verfahren zum Betreiben einer aufgeladenen Brennkraftmaschine der oben genannten Art.

Im Rahmen dervorliegenden Erfindung umfaßt der Begriff Brennkraftmaschine sowohl Dieselmotoren als auch Ottomotoren.

In den letzten Jahren hat sich eine Entwicklung hin zu kleinen, hochaufgeladenen Motoren vollzogen, wobei die Aufladung in erster Linie ein Verfahren zur Leistungssteigerung ist, bei dem die für den motorischen Verbrennungsprozeß benötigte Luft verdichtet wird. Die wirtschaftliche Bedeutung dieser Motoren für die Automobilbauindustrie nimmt weiter ständig zu.

In der Regel wird für die Aufladung ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Vorteile des Abgasturboladers beispielsweise im Vergleich zu mechanischen Ladern besteht darin, daß keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der Brennkraftmaschine bezieht und somit die bereitgestellte Leistung mindert und auf diese Weise den Wirkungsgrad nachteilig beeinflußt, nutzt der Abgasturbolader die Abgasenergie der heißen Abgase.

Ein typischer Vertreter der kleinen, hochaufgeladenen Motoren ist eine Brennkraftmaschine mit Abgasturboaufladung, bei der die Abgasenergie zur Verdichtung der Verbrennungsluft eingesetzt wird, und die zusätzlich über eine Ladeluftkühlung verfügt, mit der die komprimierte Verbrennungsluft vor Eintritt in den Brennraum runtergekühlt wird.

Wie oben bereits ausgeführt, hat in den letzten Jahren der Einsatz von Abgasturboladern stark zugenommen, wobei ein Ende dieser Entwicklung nicht abzusehen ist. Die Gründe hierfür sind vielschichtig und werden im folgenden kurz dargelegt.

Die Aufladung dient in erster Linie der Leistungssteigerung der Brennkraftmaschine. Die für den Verbrennungsprozeß benötigte Luft wird dabei verdichtet, wodurch jedem Zylinderpro Arbeitsspiel eine größere Luftmasse zugeführt werden kann. Dadurch können die Kraftstoffmasse und damit der Mitteldruck $p_{me}$ gesteigert werden.

Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günsti-geren Leistungsmasse. Bei gleichen Fahrzeugrandbe-dingungen läßt sich so das Lastkollektiv zu höheren Lasten hin verschieben, wo der spezifische Kraftstoffverbrauch niedriger ist. Letzteres wird auch als Downsizing bezeichnet.

Die Aufladung unterstützt folglich das ständige Bemühen in der Entwicklung von Verbrennungsmotoren, aufgrund der begrenzten Ressourcen an fossilen Energieträgem, insbesondere aufgrund der begrenzten Vorkommen an Mineralöl als Rohstoff für die Gewinnung von Brennstoffen fürden Betrieb von Verbrennungskraftmaschinen, den Kraftstoffverbrauch zu minimieren, d. h. den Wirkungsgrad der Brennkraftmaschine zu verbessern.

Ein weiteres grundsätzliches Ziel ist es, die Schadstoffemissionen zu reduzieren. Bei der Lösung dieser Aufgabe kann die Aufladung der Brennkraftmaschine ebenfalls zielführend sein. Bei gezielter Auslegung der Aufladung können nämlich Vorteile im Wirkungsgrad und bei den Abgasemissionen erzielt werden. So können mittels geeigneter Aufladung beispielsweise beim Dieselmotor die Stickoxidemissionen ohne Einbußen beim Wirkungsgrad verringert werden. Gleichzeitig können die Kohlenwasserstoffemissionen günstig beeinflußtwerden. Die Emissionen an Kohlendioxid, die direkt mit dem Kraftstoffverbrauch korrelieren, nehmen mit sinkendem Kraftstoffverbrauch ebenfalls ab. Die Aufladung eignet sich daher ebenfalls zur Reduzierung der Schadstoffemissionen. Um die zukünftigen Grenzwerte für Schadstoffemissionen einzuhalten, sind aber darüber hinaus weitere Maßnahmen erforderlich, auf die weiter unten noch im Detail eingegangen werden wird, da ihnen im Rahmen der vorliegenden Erfindung eine wesentliche Rolle zukommt Zunächst sollen aber die grundsätzlichen Probleme bei der Auslegung des Abgasturboladers aufgezeigt werden, die bei sämtlichen anderen Maßnahmen mit in Betracht zu ziehen sind.

Schwierigkeiten bereitet die Auslegung des Abgasturboladers, wobei grundsätzlich eine spürbare Leistungssteigerung in allen Drehzahlbereichen angestrebt wird. Nach dem Stand derTechnik wird aber ein starker Drehmomentabfall bei Unterschreiten einer bestimmten Drehzahl beobachtet. Dieser Effekt ist unerwünscht, da der Fahrer im Vergleich mit einem nicht aufgeladenen Motor gleicher Maximalleistung auch im unteren Drehzahlbereich ein entsprechend großes Drehmoment erwartet. Das sogenannte Turboloch bei niedrigen Drehzahlen zählt daher auch zu den gravierendsten Nachteilen der Abgasturboaufladung.

Verständlich wird dieser Drehmomentabfall, wenn berücksichtigt wird, daß das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, daß zu niedrigeren Drehzahlen hin das Ladedruckverhältnis ebenfalls abnimmt, was gleichbedeutend ist mit einem Drehmomentabfall.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden, was aber zu Nachteilen bei hohen Drehzahlen führt.

In der Praxis führen die beschriebenen Zusammenhänge häufig dazu, daß ein möglichst kleiner Abgasturbolader d.h. ein Abgasturbolader mit einem möglichst kleinen Turbinenquerschnitt eingesetzt wird. Letztendlich wird damit dem Drehmomentabfall nur in geringem Maße entgegengewirkt und der Drehmomentabfall weiter zu geringeren Drehzahlen hin verschoben. Zudem sind dieser Vorgehensweise d. h. der Verkleinerung des Turbinenquerschnittes Grenzen gesetzt, da die gewünschte Aufladung und Leistungssteigerung auch bei hohen Drehzahlen uneingeschränkt und in dem gewünschten Maße möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung, wobei die Abgasabblasung mittels Ladedruck oder mittels Abgasdruck gesteuert werden kann. Eine derartige Turbine wird auch als Waste-Gate-Turbine bezeichnet. Überschreitet der Abgasmassenstrom eine kritische Größe wird ein Teil des Abgasstromes im Rahmen der sogenannten Abgasabblasung mittels einer Bypaßleitung an der Turbine vorbei geführt. Diese Vorgehensweise hat aber - wie bereits oben angesprochen - den Nachteil, daß das Aufladeverhalten bei höheren Drehzahlen unzureichend ist

Grundsätzlich ist auch eine kleine Auslegung des Turbinenquerschnittes zusammen mit einer Ladeluftabblasung möglich, wobei diese Variante aufgrund der energetischen Nachteile der Ladeluftabblasung d.h. der Verschlechterung des effektiven Wirkungsgrades selten zum Einsatz kommt, und die vorhandenen Verdichter an ihre Fördergrenze geraten können und somit die gewünschte Leistung nicht mehr dargestellt werden kann.

Bei Dieselmotoren kann eine kleine Auslegung des Turbinenquerschnittes und die gleichzeitige Begrenzung des Ladedruckes durch Abregelung der Brennstoffmasse bei hohen Drehzahlen zielführend sein. Die Möglichkeiten zur Leistungssteigerung mittels Abgasturboaufladung werden dabei aber nicht voll ausgeschöpft.

Der Abgasturbolader kann aber auch auf hohe Drehzahlen abgestimmt mit einem großen Turbinenquerschnitt ausgelegt werden. Dabei wird das Saugsystem dann in der Weise gestaltet, daß durch Wellenvorgänge bei niedrigen Drehzahlen eine dynamische Aufladung erfolgt. Nachteilig ist dabei der hohe Bauaufwand und das träge Verhalten bei Drehzahländerungen.

Eine Turbine mit variabler Turbinengeometrie gestattet eine Anpassung der Turbinengeometrie bzw. des wirksamen Turbinenquerschnittes an den jeweiligen Betriebspunkt der Brennkraftmaschine, so daß eine Regelung der Turbinengeometrie im Hinblick auf niedrige und hohe Drehzahlen als auch für niedrige und hohe Lasten erfolgen kann.

Die Drehmomentcharakteristik einer aufgeladenen Brennkraftmaschine kann des weiteren durch eine Registeraufladung verbessert werden. Dabei werden mehrere parallel geschaltete Turbolader mit entsprechend kleinen Turbinenquerschnitten mit steigender Last zugeschaltet.

Schließlich kann die Drehmomentcharakteristik auch mittels mehrerer in Reihe geschalteter Abgasturboladervorteilhaft beeinflußt werden, wie dies der Fall ist bei der Brennkraftmaschine, die Gegenstand der vorliegenden Erfindung ist. Durch das in Reihe Schalten von zwei Abgasturboladern, von denen ein Abgasturbolader als Hochdruckstufe und ein Abgasturbolader als Niederdruckstufe dient, kann das Verdichterkennfeld in vorteilhafter Weise aufgeweitet werden und zwar sowohl hin zu kleineren Verdichterströmen als auch hin zu größeren Verdichterströmen.

Insbesondere ist bei dem als Hochdruckstufe dienenden Abgasturbolader ein Verschieben der Pumpgrenze hin zu kleineren Verdichterströmen möglich, wodurch auch bei kleinen Verdichterströmen hohe Ladedruckverhältnisse erzielt werden können, was im unteren Teillastbereich die Drehmomentcharakteristik deutlich verbessert. Erreicht wird dies durch eine Auslegung der Hochdruckturbine auf kleine Abgasmassenströme und Vorsehen einer Bypaßleitung, mit der bei zunehmendem Abgasmassenstrom zunehmend Abgas an der Hochdruckturbine vor bei geführt wird. Die Bypaßleitung zweigt hierzu stromaufwärts der Hochdruckturbine von der Abgasleitung ab und mündet stromabwärts derTurbine wieder in die Abgasleitung, wobei in der Bypaßleitung ein Absperrelement angeordnet ist, um den an der Hochdruckturbine vorbeigeführten Abgasstrom zu steuern.

Zwei in Reihe geschaltete Abgasturbolader bieten aber darüber hinaus noch weitere Vorteile. Die Leistungssteigerung durch Aufladung kann weiter erhöht werden und zwar bis weit über 65 bis 70 KW pro Liter Hubraum - gegebenenfalls bis auf 100 KW pro Liter Hubraum - d. h. das Downsizing wird durch eine mehrstufige Aufladung mittels Abgasturboladern weiter fortgeführt. Des weiteren ist das Ansprechverhalten einer derartig aufgeladenen Brennkraftmaschine - insbesondere im Teillastbereich - deutlich verbessert gegenüber einer vergleichbaren Brennkraftmaschine mit einstufiger Aufladung. Der Grund hierfür ist darin zu finden, daß die kleinere Hochdruckstufe wenigerträge ist als ein im Rahmen einer einstufigen Aufladung verwendeter größerer Abgasturbolader, weil sich das Laufzeug eines kleiner dimensionierten Abgasturboladers schneller beschleunigen und verzögern läßt.

Dies hat auch hinsichtlich der Partikelemissionen Vorteile. Da bei einer Beschleunigung die notwendige Zunahme der den Zylindern zugeführten Luftmasse der erhöhten Kraftstoffmenge infolge der Trägheit der Laufräder nur verzögert erfolgt, wird die Verbrennungsluftbei dem verwendeten kleineren Hochdruckturbolader nahezu verzögerungsfrei dem Motor zugeführt, und somit werden Betriebszustände mit erhöhter Partikelemission nahezu vermieden.

Eine Brennkraftmaschine gemäß dem Oberbegriff des Anspruches 1 - d.h. der gattungsbildenden Art - mit zwei in Reihe geschalteten Abgasturboladern wird beispielsweise in der europäischen Patentanmeldung EP 1 396 619 A1 beschrieben. Der Turbinenlaufraddurchmesser der Niederdruckturbine ist dabei größer ausgeführt als der Laufraddurchmesser der Hochdruckturbine.

Die EP 1 396 619 A1 hat die gleichzeitige Verwendung einer Abgasturboaufladung und einer Abgasnachbehandlung zum Gegenstand, wobei die möglichst nahe Anordnung des Abgasnachbehandlungssystems am Auslaß der Brennkraftmaschine angestrebt wird. Es werden mehrere Konzepte aufgezeigt. Bei einer Ausführungsform gemäß der EP 1 396 619 A1 wird der Abgasstrom mittels geeigneter Umschalteinrichtungen und Bypaßleitungen in der Art gelenkt, daß er an beiden Turbinen vorbei geführt wird. Dies bietet hinsichtlich eines in der Abgasleitung stromabwärts der Turbinen angeordneten Katalysators - insbesondere nach einem Kaltstart bzw. in der Warmlaufphase der Brennkraftmaschine - Vorteile, da die heißen Abgase direkt dem Katalysator zugeführt werden und nicht erst unter Wärmeabgabe durch die als Temperatursenke anzusehenden Turbinen geleitet werden. Auf diese Weise erreicht der Katalysator nach einem Kaltstart bzw. in der Warmlaufphase schneller seine Anspring temperatur. EineweitereAusführungsform sieht die Anordnung eines zweiten Katalysators in der die beiden Turbinen umgehenden Bypaßleitung vor.

Im Gegensatz hierzu betrifft die vorliegende Erfindung die Problematik, die sich bei der gleichzeitigen Verwendung einer Abgasturboaufladung und einer Abgasrückführung einstellt, wie weiter unten noch näher erläutert werden wird.

Eine Brennkraftmaschine, die sowohl mit einer Abgasturboaufladung als auch mit einer Abgasrückführung ausgestattet ist, wird beispielsweise in der US 2002/0112478 A1 und in der EP 1 375 868 A1 beschrieben.

Wie bereits oben erwähnt sind neben der Aufladung weitere Maßnahmen erforderlich, um zukünftige Grenzwerte für Schadstoffemissionen einzuhalten. Im Mittelpunkt der Entwicklungsarbeiten steht dabei unter anderem die Reduzierung der Stickoxidemissionen, die insbesondere bei den Dieselmotoren von hoher Relevanz sind. Da die Bildung der Stickoxide nicht nur einen Luftüberschuß, sondern auch hohe Temperaturen erfordert, besteht ein Konzept zur Senkung der Stickoxidemissionen darin, Verbrennungsprozesse bzw. -verfahren mit niedrigeren Verbrennungstemperaturen zu entwickeln.

Dabei ist die Abgasrückführung d. h. die Rückführung von Verbrennungsgasen aus der Abgasleitung in die Ansaugleitung zielführend, bei der mit zunehmender Abgasrückführrate die Stickoxidemissionen deutlich gesenkt werden können. Die Abgasrückführrate $X_{AGR}$ bestimmt sich dabei wie folgt:

$$x_{AGR} = m_{AGR} / (m_{AGR} + m_{Frischluft})$$

wobei $m_{AGR}$ die Masse an zurückgeführtem Abgas und m Frischluft die zugeführte - gegebenenfalls durch einen Verdichter geführte und komprimierte - Frischluft bzw. Verbrennungsluft bezeichnet.

Die Abgasrückführung eignet sich auch zur Reduzierung der Emissionen an unverbrannten Kohlenwasserstoffen im Teillastbereich.

Um eine deutliche Senkung der Stickoxidemissionen zu erreichen, sind hohe Abgasrückführraten erforderlich, die in der Größenordnung von $X_{AGR} \approx 60\%$ bis 70% liegen können.

Dadurch ergibt sich aber ein Konflikt beim Betrieb einer Brennkraftmaschine mit Abgasturboaufladung und gleichzeitiger Verwendung einer Abgasrückführung, da das rückgeführte Abgas stromaufwärts der Turbine aus der Abgasleitung entnommen wird und zum Antrieb der Turbine nicht mehr zur Verfügung steht. Anhand einer einstufig aufgeladenen Brennkraftmaschine mit einem Abgasturbolader läßt sich dieser Konflikt leicht verdeutlichen.

Bei einer Steigerung der Abgasrückführrate nimmt gleichzeitig der verbleibende der Turbine zugeführte Abgasstrom ab. Der kleinere Abgasmassenstrom durch die Turbine führt zu einem kleineren Turbinendruckverhältnis. Mit abnehmendem Turbinendruckverhältnis nimmt das Ladedruckverhältnis ebenfalls ab, was gleichbedeutend ist mit einem kleineren Verdichtermassenstrom. Neben dem abnehmenden Ladedruck können sich zusätzliche Probleme beim Betrieb des Verdichters hinsichtlich der Pumpgrenze des Verdichters einstellen.

Die beschriebenen Effekte d.h. die Zunahme der Abgasrückführung und die dadurch hervorgerufene gleichzeitige Abnahme des Ladedrucks bzw. Verdichterstroms führen zu einer fetteren Zylinderfrischladung d. h. zu weniger Frischluft bzw. Sauerstoff im Brennraum. Dies führt zu einer erhöhten Rußbildung, insbesondere bei der Beschleunigung, denn aufgrund der Trägheit des Laufzeugs des Abgasturboladers wird - wie bereits oben erwähnt - die Brennstoffmenge häufig schneller erhöht als die den Zylindern zugeführte Frischluft.

Aus diesem Grund sind Aufladekonzepte erforderlich, die - insbesondere im Teillastbereich - ausreichend hohe Ladedrücke bei gleichzeitig hohen Abgasrückführraten sicherstellen. Der Teillastbereich ist insbesondere aufgrund der für die Bestimmung der Schadstoffemissionen vorgeschriebenen gesetzlichen Abgastests von hoher Relevanz. Grundsätzlich werden aber unter allen Betriebsbedingungen ausreichend hohe Ladedrükke und hohe Abgasrückführraten angestrebt.

An dieser Stelle sei angemerkt, daß der Begriff "niedrige Lasten" bzw. "unterer Teillastbereich" im Rahmen der vorliegenden Erfindung insbesondere dahingehend zu verstehen ist, daß unter diesen Begriff sämtliche Lastzustände subsumiert werden, die bei der Absolvierung der gesetzlich vorgeschriebenen Tests zur Bestimmung der Schadstoffemissionen durchlaufen werden.

Erschwert wird der aufgezeigte Konflikt zwischen Abgasrückführung und Aufladung dadurch, daß die Rückführung von Abgas aus der Abgasleitung in die Ansaugleitung eine Druckdifferenz d. h. ein Druckgefälle von der Abgasseite hin zur Ansaugseite erfordert. Zur Erzielung der geforderten hohen Abgasrückführraten ist darüber hinaus ein hohes Druckgefälle erforderlich. Diese Zielsetzung erfordert einen niedrigen Ladedruck bzw. einen Ladedruck, der niedriger ist als der Abgasgegendruck in der zur Abgasrückführung genutzten Abgasleitung, was der oben aufgestellten Forderung nach einem hohen Ladedruck widerspricht.

Die aufgezeigten Konflikte bei der gleichzeitigen Verwendung von Abgasturboladern und Abgasrückführsystemen können nach dem Stand der Technik nicht aufgelöst werden kann.

Vor diesem Hintergrund ist es die Aufgabe der vorliegenden Erfindung, eine aufgeladene Brennkraftmaschine gemäß dem Oberbegriff des Anspruchs 1 d. h. der gattungsbildenden Art bereitzustellen, mit der die nach dem Stand der Technik bekannten Nachteile überwunden werden und mit der insbesondere gleichzeitig hohe Abgasrückführraten und hohe Ladedrücke in sämtlichen Lastbereichen der Brennkraftmaschine realisiert werden können.

Eine weitere Teilaufgabe der vorliegenden Erfindung ist es, ein Verfahren zum Betreiben einer aufgeladenen Brennkraftmaschine der oben genannten Art aufzuzeigen.

Gelöst wird die erste Teilaufgabe durch eine aufgeladene Brennkraftmaschine.

Die erfindungsgemäße Brennkraftmaschine ist mit zwei in Reihe geschalteten, in einer Abgasleitung angeordneten Turbinen und zwei in Reihe geschalteten, in einer Ansaugleitung angeordneten Verdichtern ausgestattet.

Vorteilhaft sind daher Ausführungsformen, bei denen der erste Verdichter größer ausgelegt ist als der zweite Verdichter, weil bei dieser Ausgestaltung der Brennkraftmaschine der erste Verdichter im Rahmen der zweistufigen Verdichtung die Niederdruckstufe bildet, wohingegen der zweite Verdichter die bereits vorverdichtete Luft komprimiert und somit die Hochdruckstufe darstellt.

Aus demselben Grund sind Ausführungsformen vorteilhaft, bei denen die erste Turbine größer ausgelegt ist als die zweite Turbine. Denn die zweite Turbine dient als Hochdruckturbine, während sich in der ersten Turbine ein Abgasstrom entspannt, der bereits infolge des Durchlaufens der Hochdruckstufe einen geringeren Druck und eine geringere Dichte aufweist.

Erfindungsgemäß verfügt die Turbine der Hochdruckstufe über eine variable Turbinengeometrie und eine Bypaßleitung, durch die bei Umgehung der Turbine Abgas an der Turbine vorbei geleitet werden kann.

Eine variable Turbinengeometrie erhöht die Flexibilität der Aufladung. Sie gestattet eine stufenlose Anpassung der Turbinengeometrie an den jeweiligen Betriebspunkt der Brennkraftmaschine bzw. an den momentanen Abgasmassenstrom. Im Gegensatz zu einer Turbine mit fester Geometrie muß kein Kompromiß bei der Auslegung der Turbine eingegangen werden, um in sämtlichen Drehzahl- bzw. Lastbereichen eine mehr oder weniger zufriedenstellende Aufladung zu realisieren.

Insbesondere gestattet die Kombination aus Turbine mit variabler Turbinengeometrie und einer diese Turbine überbrückenden Bypaßleitung die Auslegung der Hochdruckturbine auf sehr kleine Abgasmassenströme und damit auf den unteren Teillastbereich. Folglich können auch bei niedrigen Drehzahlen bzw. auch bei sehr geringen Abgasmassenströmen hohe Turbinendruckverhältnisse erzielt werden. Gleichzeitig werden die für die Rückführung heißer Abgase notwendigen Abgasgegendrücke, die bei einer aufgeladenen Brennkraftmaschine infolge des prinzipbedingt höheren Ladedrukkes vergleichsweise hoch sein müssen, generiert.

Eine entsprechende Auslegung des Hochdruckverdichters - wie oben vorgeschlagen - verschiebt die Pumpgrenze hin zu kleineren Verdichterströmen, wodurch auch bei kleinen Abgasströmen bzw. Verdichterströmen hohe Ladedruckverhältnisse erzieltwerden können, was im unteren Teillastbereich die Aufladung optimiert.

In diesem Lastbereich wird der überwiegende Anteil des Abgasstromes erfindungsgemäß durch die zweite Turbine geleitet. Es kann aber auch der gesamte Abgasstrom vollständig durch die zweite Turbine des zweiten Abgasturboladers geleitet werden. Wird der Abgasstrom zur Generierung hoher Ladedrücke im unteren und mittleren Teillastbereich im wesentlichen durch die kleine Turbine geführt, wird dadurch gleichzeitig ein ausreichend hoher Abgasgegendruck in den Abgasleitungen erzeugt, wodurch eine Möglichkeit zur Realisierung hoher AGR-Raten sichergestellt wird.

Mit zunehmender Last bzw. zunehmender Abgasmenge wird ein zunehmender Anteil des Abgasstromes über die erste Bypaßleitung an der Hochdruckturbine vorbei geleitet. Stromabwärts der Hochruckturbine durchströmt das Abgas die erste Turbine d.h. die Turbine der Niederdruckstufe. Diese erste Turbine kann auf große Abgasmassenströme ausgelegt werden, so daß der erste Abgasturbolader bei großen Abgasmassenströmen, wie sie bei hohen Lasten, insbesondere bei Vollast, auftreten, für einen ausreichend hohen Ladedruck sorgt. Der für die Abgasrückführung der aufgeladenen Brennkraftmaschine notwendige Abgasgegendruck liegt unter diesen Betriebbedingungen ebenfalls vor und wird stromaufwärts der Hochdruckturbine abgegriffen.

Dadurch können in sämtlichen Betriebspunkten der Brennkraftmaschine ein hoher Ladedruck und ein hoher Abgasgegendruck bzw. eine hohe Abgasrückführrate realisiert werden. Im Gegensatz zu herkömmlichen Aufladekonzepten muß kein Kompromiß bei der Auslegung des Abgasturboladers eingegangen werden, um in sämtlichen Drehzahlbereichen eine mehr oder weniger zufriedenstellende Aufladung zu realisier. Gleichzeitig werden hohe AGR-Raten ermöglicht.

In der Leitung zur Abgasrückführung ist ein zusätzlicher Kühler vorgesehene. Dieser zusätzliche Kühler senkt die Temperatur im heißen Abgasstrom und steigert damit die Dichte der Abgase. Die Temperatur der Zylinderfrischladung, die sich bei derMischung der Frischluft mit den rückgeführten Abgasen einstellt, wird hierdurch folglich weiter gesenkt, wodurch auch der zusätzliche Kühler zu einer besseren Füllung des Brennraums mit Frischgemisch beiträgt.

Der nach dem Stand der Technik nicht aufzulösende Konflikt zwischen hoher Abgasrückführrate und hohem Ladedruck unter sämtlichen Betriebsbedingungen der Brennkraftmaschine kann auf diese Weise entflochten werden. Während unter Betriebsbedingungen mit großen Mengen an heißem Abgas vorwiegend der erste Abgasturbolader zum Einsatz kommt, besteht bei kleineren Abgasmengen die Möglichkeit, durch geeignete Steuerung der vorgesehenen Mittel den Schwerpunkt der Aufladung auf den kleineren Abgasturboladerzu verlegen und den Abgasstrom im wesentlichen über die zweite kleinere Turbine zu leiten.

Dadurch wird die erste der Erfindung zugrunde liegende Aufgabe gelöst, nämlich eine aufgeladene Brennkraftmaschine bereitzustellen, mit der die nach dem Stand der Technik bekannten Nachteile überwunden werden und mit der insbesondere gleichzeitig hohe Abgasrückführraten und hohe Ladedrücke in sämtlichen Lastbereichen der Brennkraftmaschine realisiert werden können.

Die zweite Bypaßleitung gestattet die Umgehung des Hochdruckverdichters. Dies ermöglicht die Abstimmung des durch den Hochdruckverdichter geführten Frischluftmassenstromes auf den durch die Hochdruckturbine geführten Abgasmassenstrom und damit an die zur Verfügung stehende Turbinenleistung.

In den Fällen, in denen das Abgas überwiegend bzw. vollständig die erste große Turbine durchströmt und daher die zweite, kleinere Turbine nahezu keine bzw. keine Leistung abgibt und der erste, große Verdichter nahezu alleine bzw. vollständig den notwendigen Ladedruck generiert, stellt der zweite Verdichter lediglich einen Strömungswiderstand für die vom ersten Verdichter angesaugte und komprimierte Frischluft auf dem Weg zu den Zylindern dar. Eine Bypaßleitung gestattet dann die Umgehung des zweiten Verdichters.

Das Absperrelement gestattet die Aufteilung des Gesamtfrischluftstroms in zwei Teilströme, nämlich in einen Teilstrom, der durch die zweite Bypaßleitung geführt wird, und einen Teilstrom, der durch den Hochdruckverdichter geleitet wird.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen das Absperrelement in der ersten Bypaßleitung ein Ventil oder eine Drosselklappe ist.

Vorteilhaft sind Ausführungsformen der Brennkraftmaschine, bei denen das Absperrelement elektrisch, hydraulisch, pneumatisch, mechanisch oder magnetisch steuerbar ist, vorzugsweise mittels Motorsteuerung.

Vorteilhaft sind Ausführungsformen der Brennkraftmaschine, bei denen der zweite Verdichter eine variable Verdichtergeometrie (WG) aufweist. Diese Ausführungsform ist vorteilhaft, weil die Turbine des zweiten Abgasturboladers über eine variable Turbinengeometrie verfügt und eine variable Verdichtergeometrie somit auf die Turbinengeometrie kontinuierlich abstimmbar ist.

Insbesondere, wenn nur ein geringer Abgasmassenstrom durch die zweite Turbine geleitet wird, erweist sich eine variable Verdichtergeometrie (WG) als vorteilhaft, da durch Verstellen der Schaufeln die Pumpgrenze des Verdichters im Verdichterkennfeld hin zu kleinen Verdichterströmen verschoben werden kann und so ein Arbeiten des Verdichters jenseits der Pumpgrenze vermieden wird.

Vorteile bietet die veränderbare Verdichtergeometrie des zweiten Verdichters aber insbesondere in den Betriebszuständen, in denen das Abgas überwiegend bzw. vollständig die erste große Turbine durchströmt und daher die zweite, kleinere Turbine nahezu keine bzw. keine Leistung abgibt und der erste, große Verdichter nahezu alleine bzw. vollständig den notwendigen Ladedruck generiert. In diesen Fällen stellt der zweite Verdichter lediglich einen Strömungswiderstand für die vom ersten Verdichter angesaugte und komprimierte Frischluft auf dem Weg zu den Zylindern dar. Eine variable Verdichtergeometrie gestattet dann die Entdrosselung der Ansaugleitung durch Vergrößerung des Strömungsquerschnittes des zweiten Verdichters.

Eine variable Verdichtergeometrie (WG) kann die zweite Bypaßleitung entbehrlich machen, da der Verdichter (WG) - im Gegensatz zu einem Verdichter mit fester Geometrie-dem Frischluftmassenstrom angepaßt werden kann. Hierzu muß die Geometrie des Verdichters bzw. der Strömungsquerschnitt des Verdichters aber in einem weiten Bereich verstellbar sein, so daß der Verdichter sowohl sehr kleinen als auch sehr großen Verdichtermassenströmen angepaßt werden kann.

Vorteilhaft sind Ausführungsformen der Brennkraftmaschine, bei denen der zweite Verdichter eine feste, nicht veränderbare Verdichtergeometrie aufweist. Im Gegensatz zu dem zuvor beschriebenen Verdichter mit variabler Geometrie (VVG) entfällt hier prinzipbedingt eine Steuerung. Im ganzen weist diese Ausführungsform daher insbesondere Kostenvorteile auf.

Vorteilhaft sind Ausführungsformen der Brennkraftmaschine, bei denen zum Zwecke der Abgasabblasung eine dritte Bypaßleitung vorgesehen ist, die stromaufwärts der ersten Turbine von der Abgasleitung abzweigt und stromabwärts dieser ersten Turbine wieder in die Abgasleitung einmündet, wobei zur Steuerung der Abgasabblasung ein Absperrelement in der dritten Bypaßleitung vorgesehen ist.

In der Regel und insbesondere wenn die Niederdruckturbine eine feste, nicht veränderbare Geometrie aufweist, wird mit zunehmendem Abgasstrom ein größerer Anteil des Abgases über die dritte Bypaßleitung an der Turbine vorbei geführt. Zur Steuerung der Abgasabblasung ist ein Absperrelement in der Bypaßleitung vorgesehen. Eine derartige Waste-Gate-Turbine ist kostengünstiger als eine Turbine mit variabler Geometrie. Zudem ist die Steuerung einfacher und daher ebenfalls kostengünstiger als bei einer variablen Turbinengeometrie.

Vorteilhaft sind dennoch Ausführungsformen der Brennkraftmaschine, bei denen die erste Turbine d. h. die Turbine der Niederdruckstufe eine variable Turbinengeometrie aufweist. Das weiter oben für die Turbine der Hochdruckstufe Gesagte hat ebenso Gültigkeit für die Niederdruckturbine, weshalb auf diese Ausführungen Bezug genommen wird.

Eine variable Turbinengeometrie erhöht die Flexibilität der Aufladung. Sie gestattet durch Verstellen der Laufradschaufeln eine stufenlose Anpassung der Turbinengeometrie an den momentanen Abgasmassenstrom. Gegebenenfalls kann auf die energetisch nachteilige Abgasabblasung, wie sie bei Waste-Gate-Turbinen vorgenommen wird, verzichtet werden, wodurch die zuvor beschriebene dritte Bypaßleitung entbehrlich werden würde. Vorraussetzung dafür ist, daß die Geometrie der Niederdruckturbine in einem weiten Bereich verstellbar ist.

Vorteilhaft sind aber auch Ausführungsformen der Brennkraftmaschine, bei denen die erste Turbine eine feste, nicht veränderbare Turbinengeometrie aufweist. Diese Ausführungsform hat insbesondere Kostenvorteile. Einerseits entfällt bei dieser Turbinenbauweise die komplexe und kostenintensive verstellbare Turbinengeometrie bzw. -mechanik. Andererseits ist prinzipbedingt keine Steuerung der Turbine notwendig.

Vorteilhaft sind aber auch Ausführungsformen der Brennkraftmaschine, bei denen der erste Verdichter mit einer Bypaßleitung ausgestattet ist, die stromabwärts des ersten Verdichters aus der Ansaugleitung abzweigt. Diese Bypaßleitung kann der Ladeluftabblasung dienen und kann stromaufwärts des ersten Verdichters wieder in die Ansaugleitung münden, wodurch die im ersten Verdichter komprimierte Frischluft nicht abgeblasen, sondern lediglich zurückgeführt wird. Zur Steuerung der abgeblasenen bzw. rückgeführten Frischluftmenge ist ein Absperrelement in der Bypaßleitung vorgesehen.

Diese Bypaßleitung kann aber auch zum Ansaugen von Frischluft dienen und zwar in den Fällen, in denen kaum Abgas die erste große Turbine durchströmt und daher die zweite, kleinere Turbine die Verdichterarbeit leistet. Dann stellt der erste Verdichter lediglich einen Strömungswiderstand für die vom zweiten Verdichter angesaugte Frischluft dar. Eine Bypaßleitung gestattet dann die Umgehung des zweiten Verdichters und damit eine Entdrosselung der Ansaugleitung.

Vorteilhaft sind aber auch Ausführungsformen der Brennkraftmaschine, bei denen der erste Verdichter eine feste, nicht veränderbare Verdichtergeometrie aufweist. Verdichter mit fester Geometrie weisen aus denselben Gründen wie Turbinen mit fester Geometrie, nämlich aufgrund der einfacheren Bauweise, Kostenvorteile auf.

Vorteilhaft sind aber auch Ausführungsformen der Brennkraftmaschine, bei denen der erste Verdichter eine variable Verdichtergeometrie (VVG) aufweist. Es wird bezug genommen auf die bereits oben gemachten Ausführungen zur variablen Geometrie eines Verdichters bzw. einer Turbine.

Vorteile bietet die veränderbare Verdichtergeometrie des ersten Verdichters aber insbesondere in den Betriebszuständen, in denen kaum Abgas durch die erste, größere Turbine strömt und daher kaum Leistung von der ersten Turbine zur Verdichtung der Frischluft bereitgestellt wird. In diesen Fällen stellt der erste Verdichter lediglich einen Strömungswiderstand für die vom zweiten Verdichter angesaugte Frischluft dar. Eine variable Verdichtergeometrie gestattet dann die Entdrosselung der Ansaugleitung durch Vergrößerung des Strömungsquerschnittes des ersten Verdichters.

Vorteilhaft sind Ausführungsformen der Brennkraftmaschine, bei denen stromabwärts der Verdichter ein Ladeluftkühler in der Ansaugleitung angeordnet ist. Der Ladeluftkühler senkt die Lufttemperatur und steigert damit die Dichte der Luft, wodurch auch der Kühler zu einer besseren Füllung des Brennraums mit Luft d.h. zu einer größeren Luftmasse beiträgt.

Vorteilhaft sind Ausführungsformen der Brennkraftmaschine, bei denen die Leitung zur Abgasrückführung stromabwärts des Ladeluftkühlers in die Ansaugleitung mündet. Auf diese Weise wird der Abgasstrom nicht durch den Ladeluftkühler geführt und kann folglich diesen Kühler nicht durch Ablagerungen von im Abgasstrom enthaltenen Schadstoffen, insbesondere Rußpartikeln und verschmutzen.

Vorteilhaft sind Ausführungsformen der Brennkraftmaschine, bei denen in der Leitung zur Abgasrückführung ein Absperrelement vorgesehen ist. Dieses Absperrelement dient der Steuerung der Abgasrückführrate.

Die zweite der Erfindung zugrunde liegende Teilaufgabe wird gelöst durch ein Verfahren zum Betreiben einer aufgeladenen Brennkraftmaschine, das dadurch gekennzeichnet ist, dass

    ■ bei niedrigen Lasten d. h. im unteren Teillastbereich bzw. bei kleinen Abgasmengen der überwiegende Anteil des Abgasstromes durch die zweite Turbine des zweiten Abgasturboladers geleitet wird.

Vorteilhaft sind Ausführungsformen des Verfahrens, bei denen bei niedrigen Lasten d. h. im Teillastbereich bzw. bei kleinen Abgasmengen der Abgasstrom vollständig durch die zweite Turbine des zweiten Abgasturboladers geleitet wird.

Das im Zusammenhang mit der erfindungsgemäßen Brennkraftmaschine Gesagte gilt ebenfalls für das erfindungsgemäße Verfahren. Das in der ersten Bypaßleitung vorgesehene Absperrelement, welches eine Aufteilung des Gesamtabgasmassenstromes gestattet, wird im unteren Teillastbereich in der Weise gesteuert, daß nur ein kleiner Anteil der Abgase bzw. kein Abgas über die erste Bypaßleitung an der Hochdruckturbine vorbei geführt wird und der überwiegende Anteil des Abgasstromes die Hochdruckturbine durchströmt d.h. der durch die Hochdruckturbine geführte Abgasmassenstrom ist größer als der durch die Bypaßleitung geführte Abgasstrom.

Die Hochdruckturbine wird vorzugsweise auf kleine Abgasmassenströme ausgelegt, so daß im unteren Teillastbereich hohe AGR-Raten und gleichzeitig hohe Ladedrücke realisiert werden können.

Vorteilhaft sind aus den bereits genannten Gründen Ausführungsformen des Verfahrens, bei denen mit zunehmender Drehzahl und/oder zunehmender Last ein zunehmender Anteil des Abgasstromes über die erste Bypaßleitung geleitet wird. Diese Verfahrensvariante ermöglicht die Auslegung der Hochdruckturbine auf kleine bzw. sehr kleine Abgasmassenströme.

Vorteilhaft sind Ausführungsformen des Verfahrens, bei denen bei Lasten, die mehr als 70% der Vollast betragen, mehr als 80% des Abgasstromes über die erste Bypaßleitung geleitet wird. Bei hohen Lasten wird der überwiegende Anteil der Abgase an der Hochdruckturbine vorbei geleitet und direkt der Niederdruckturbine zugeführt, die auf größere Abgasmassenströme ausgelegt ist. Somit ist auch bei hohen Lasten ein ausreichend hoher Ladedruck gewährleistet, wobei aufgrund der Tatsache, daß die Hochdruckturbine nach wie vor von heißen Abgasen durchströmt wird und den Hochdruckverdichter antreibt, eine zweistufige Verdichtung vorgenommen wird.

Vorteilhaft sind Ausführungsformen des Verfahrens, bei denen beim Betrieb der Brennkraftmaschine immer ein Teil des Abgasstromes durch die zweite Turbine des zweiten Abgasturboladers geleitet wird.

Die Abgasströmung durch die Hochdruckturbine sollte nie ganz unterbunden werden, damit das Laufrad bzw. die Laufräder der Turbine ständig mit einer gewissen Mindestdrehzahl umlaufen. Vorteilhaft ist dies, da die Laufräder nach dem Stand der Technik mit Gleitlagern ausgestattet sind, und eine gewisse Drehzahl erforderlich ist, damit der hydrodynamische Schmierölfilm des Gleitlagers aufgebaut und aufrechterhalten wird. Auf diese Weise wird unter allen Betriebsbedingungen eine Flüssigkeitsreibung im Gleitlager sichergestellt, was günstig hinsichtlich des Verschleißes und der Lebensdauer bzw. der Funktionstüchtigkeit der Turbine ist.

Bei Brennkraftmaschinen, die über eine zweite Bypaßleitung verfügen, in der ein Absperrelement angeordnet ist und die stromaufwärts des zweiten Verdichters von der Ansaugleitung abzweigt und stromabwärts dieses zweiten Verdichters wieder in die Ansaugleitung mündet, sind Ausführungsformen des Verfahrens vorteilhaft, bei denen das in der zweiten Bypaßleitung angeordnete Absperrelement in Abhängigkeit von der Stellposition des in der ersten Bypaßleitung angeordneten Absperrelements gesteuert wird, so daß der durch den zweiten Verdichter des zweiten Abgasturboladers geführte Verdichtermassenstrom dem durch die zweite Turbine dieses Abgasturboladers geführten Abgasmassenstrom bzw. der verfügbaren Turbinenleistung angepaßt wird.

Bei Brennkraftmaschinen, die zum Zwecke der Abgasabblasung eine dritte Bypaßleitung aufweisen, in der zur Steuerung der Abgasabblasung ein Absperrelement angeordnet ist und die stromaufwärts der ersten Turbine von der Abgasleitung abzweigt und stromabwärts dieser ersten Turbine wieder in die Abgasleitung einmündet, sind Ausführungsformen des Verfahrens vorteilhaft, bei denen mit zunehmender Last ein zunehmender Anteil des Abgasmassenstromes mittels der dritten Bypaßleitung abgeblasen wird.

Diese Verfahrensvariante gestattet die Verwendung einer festen Turbinengeometrie für die Niederdruckturbine, wobei die Turbine auf Abgasmassenströme mittlerer Größe ausgelegt ist und bei großen und sehr großen Abgasmassenströmen zunehmend Abgas abgeblasen wird. Des weiteren kann aber auch eine Turbine mit variabler Turbinengeometrie vorgesehen werden, die eine Optimierung der Aufladung im mittleren und oberen Teillastbereich zuläßt, wobei nahe der Vollast zunehmend Abgas abgeblasen wird.

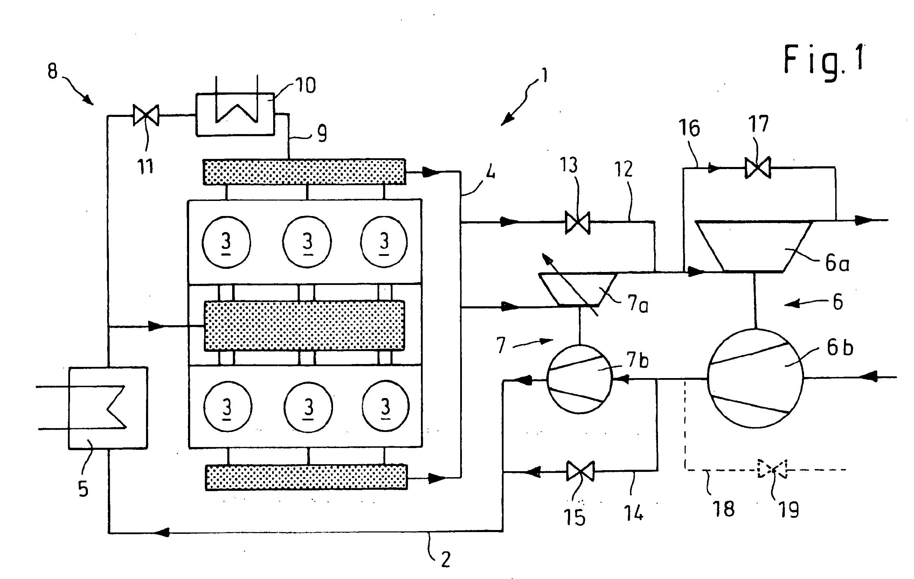

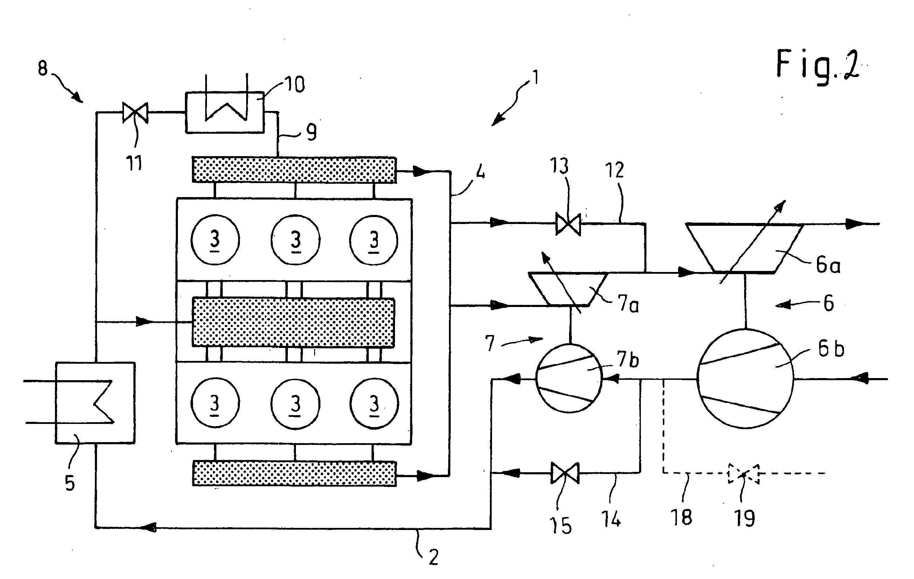

Im folgenden wird die Erfindung anhand von zwei Ausführungsbeispielen gemäß den Figuren 1 und 2 näher beschrieben. Hierbei zeigt:

Fig. 1 schematisch eine erste Ausführungsform der Brennkraftmaschine, und

Fig. 2 schematisch eine zweite Ausführungsform der Brennkraftmaschine.

Figur 1 zeigt eine erste Ausführungsform der aufgeladenen Brennkraftmaschine 1 am Beispiel eines Sechs-Zylinder-V-Motors. Die Zylinder 3 der Brennkraftmaschine 1 sind auf zwei Zylinderbänken angeordnet und bilden auf diese Weise zwei Zylindergruppen, die jeweils über eine Abgasleitung zur Abführung der heißen Verbrennungsgase verfügen, welche zu einer gemeinsamen Abgasleitung 4 zusammenführen, wodurch sämtliche Abgasleitungen miteinander in Verbindung stehen und in sämtlichen Abgasleitungen derselbe Abgasdruck herrscht. Des weiteren verfügt die Brennkraftmaschine 1 über eine Ansaugleitung 2 zur Versorgung der Zylinder 3 mit Frischluft bzw. Frischgemisch.

Die Brennkraftmaschine 1 ist mit zwei in Reihe geschalteten, in der Abgasleitung 4 angeordneten Turbinen 6a, 7a und zwei in Reihe geschalteten, in der Ansaugleitung 2 angeordneten Verdichtern 6b, 7b ausgestattet, wobei jeweils eine Turbine 6a, 7a und ein Verdichter 6b, 7b zu einem Abgasturbolader 6, 7 zusammengefaßt sind. Somit kann die der Brennkraftmaschine 1 zugeführte Frischluft zweistufig verdichtet werden, wobei ein erster Abgasturbolader 6 als Niederdruckstufe 6 dient und ein zweiter stromaufwärts der Abgasleitung 4 bzw. stromabwärts der Ansaugleitung 2 des ersten Abgasturboladers 6 angeordneter Abgasturbolader 7 als Hochdruckstufe 7 fungiert.

Aus diesem Grund ist der erste Verdichter 6b größer ausgelegt als der zweite Verdichter 7b, weil bei dieser Ausgestaltung der Brennkraftmaschine 1 der erste Verdichter 6b im Rahmen der zweistufigen Verdichtung die Niederdruckstufe 6 bildet, wohingegen der zweite Verdichter 7b die bereits vorverdichtete Luft komprimiert und somit die Hochdruckstufe 7 darstellt.

Aus demselben Grund ist die erste Turbine 6a größer ausgelegt als die zweite Turbine 7a. Denn die zweite Turbine 7a dient als Hochdruckturbine 7a, während sich in der ersten Turbine 6a ein Abgasstrom entspannt, der bereits infolge des Durchlaufens der Hochdruckstufe 7 einen geringeren Druck und eine geringere Dichte aufweist.

Stromabwärts der Verdichter 6b, 7b ist ein Ladeluftkühler 5 in der Ansaugleitung 2 angeordnet. Der Ladeluftkühler 5 senkt die Lufttemperatur und steigert damit die Dichte der Luft, wodurch er zu einer besseren Füllung der Zylinder 3 mit Luft beiträgt.

Die Brennkraftmaschine 1 ist des weiteren mit einer Abgasrückführung 8 ausgestattet. Hierzu zweigt eine Leitung 9 stromaufwärts der beiden Turbinen 6a, 7a aus der Abgasleitung 4 ab und mündet in die Ansaugleitung 2. Dabei mündet die Leitung 9 zur Abgasrückführung 8 stromabwärts des Ladeluftkühlers 5 in die Ansaugleitung 2. Auf diese Weise wird der Abgasstrom nicht durch den Ladeluftkühler 5 geführt und kann diesen Kühler 5 nicht verschmutzen.

In der Leitung 9 zur Abgasrückführung ist ein zusätzlicher Kühler 10 vorgesehen, der die Temperatur des heißen Abgasstromes senkt. Ebenfalls in der ersten Leitung 9 ist zur Steuerung der Abgasrückführrate ein Absperrelement 11 angeordnet.

Die zweite Turbine 7a des zweiten Abgasturboladers 7 weist eine variable Turbinengeometrie auf (VTG - kenntlich gemacht durch den Pfeil). Zusätzlich ist eine erste Bypaßleitung 12 vorgesehen, die stromaufwärts der zweiten Turbine 7a von der Abgasleitung 4 abzweigt und stromabwärts dieser zweiten Turbine 7a wieder in die Abgasleitung 4 mündet, wobei in der Bypaßleitung 12 ein Absperrelement 13 angeordnet ist.

Die Kombination aus variabler Turbinengeometrie und Bypaßleitung 12 gestattet die Auslegung der Hochdruckturbine 7a auf den unteren Teillastbereich bzw. auf sehr kleine Abgasmassenströme, wodurch die Aufladung in diesem Lastbereich verbessert wird. Dadurch wird auch im unteren Teillastbereich ein hoher Ladedruck generiert und gleichzeitig ein genügend hoher Abgasgegendruck bereitgestellt, der zur Abgasrückführung 8 bei der aufgeladenen Brennkraftmaschine 1 erforderlich ist.

Bei der in der Figur 1 dargestellten Ausführungsform verfügt die erste Turbine 6a über eine feste, nicht veränderbare Turbinengeometrie, was insbesondere Kostenvorteile hat. Daher ist zum Zwecke der Abgasabblasung eine dritte Bypaßleitung 16 vorgesehen, die stromaufwärts der ersten Turbine 6a von der Abgasleitung 4 abzweigt und stromabwärts dieser ersten Turbine 6a wieder in die Abgasleitung 4 einmündet, wobei zur Steuerung der Abgasabblasung ein Absperrelement 17 in der dritten Bypaßleitung 16 vorgesehen ist. Damit ist die Turbine 6a der Niederdruckstufe 6 als sogenannte Waste-Gate-Turbine ausgeführt.

Die Verdichter 6b, 7b können eine feste Geometrie aufweisen oder ebenfalls mit einer variablen Geometrie ausgeführt sein. Eine variable Geometrie ist vorteilhaft, wenn die entsprechende Turbine 6a, 7a über eine variable Turbinengeometrie verfügt und die Verdichtergeometrie auf die Turbinengeometrie kontinuierlich abgestimmt wird.

Insbesondere bei kleinen Abgasmassenströmen durch die Turbine 6a, 7a und den damit verbundenen kleinen Verdichtermassenströmen erweist sich eine variable Verdichtergeometrie (VVG) als vorteilhaft, da durch Verstellen der Schaufeln die Pumpgrenze des Verdichters 6b, 7b im Verdichterkennfeld hin zu kleinen Verdichterströmen verschoben werden kann und so ein Arbeiten des Verdichters 6b, 7b jenseits der Pumpgrenze vermieden wird. Grundsätzlich können die Verdichter6a, 7a auch mit einer Leitung zur Ladeluftabblasung ausgestattet sein, was aber aus energetischen Gründen Nachteile aufweist.

Der erste Verdichter 6b kann mit einer Bypaßleitung 18 ausgestattet werden (gestrichelt angedeutet), die stromabwärts des ersten Verdichters 6b aus der Ansaugleitung 2 abzweigt. Diese Bypaßleitung 18 dient der Ladeluftabblasung und kann stromaufwärts des ersten Verdichters 6b wieder in die Ansaugleitung 2 münden, wodurch die im ersten Verdichter 6b komprimierte Frischluft nicht abgeblasen, sondern lediglich zurückgeführt wird. Zur Steuerung der abgeblasenen bzw. rückgeführten Frischluftmenge ist ein Absperrelement 19 in der Bypaßleitung 18 vorgesehen.

Bei der in Figur 1 dargestellten Ausführungsform der Brennkraftmaschine 1 ist eine zweite Bypaßleitung 14 vorgesehen, die stromaufwärts des zweiten Verdichters 7b von der Ansaugleitung 2 abzweigt und stromabwärts dieses zweiten Verdichters 7b wieder in die Ansaugleitung 2 mündet, wobei in dieser zweiten Bypaßleitung 14 ein Absperrelement 15 angeordnet ist.

Diese zweite Bypaßleitung 14 gestattet die Umgehung des Hochdruckverdichters 7b. Dies ermöglicht die Abstimmung des durch den Hochdruckverdichter 7b geführten Frischluftmassenstromes auf den durch die Hochdruckturbine 7a geführten Abgasmassenstrom und damit an die zur Verfügung stehende Turbinenleistung.

Das Absperrelement 15 gestattet die Aufteilung des Gesamtfrischluftstroms in zwei Teilströme, nämlich in einen Teilstrom, der durch die zweite Bypaßleitung 14 geführt wird, und einen Teilstrom, der durch den Hochdruckverdichter 7b geleitet wird.

Figur 2 zeigt schematisch eine zweite Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 2 dargestellten Brennkraftmaschine 1 die erste Turbine 6a ebenfalls mit einer variablen Turbinengeometrie (VTG) ausgeführt. Dies erhöht die Qualität und Flexibilität der Aufladung weiter. Insbesondere kann dadurch die dritte Bypaßleitung entbehrlich werden, wie in Figur 2 dargestellt.

An dieser Stelle sei aber darauf hingewiesen, daß grundsätzlich auch Ausführungsformen, bei denen trotz der variablen Geometrie der Niederdruckturbine 6a eine dritte Bypaßleitung vorgesehen wird, sinnvoll sein können. Beispielsweise wenn die Niederduckturbine 6a auf den mittleren bzw. oberen Teillastbereich ausgelegt ist und nach wie vor ein Bedarf zur Abgasabblasung bei höheren Lasten, insbesondere nahe der Volllast, besteht.

**Bezugszeichen**

| 1 | aufgeladene Brennkraftmaschine |
|---|---|
| 2 | Ansaugleitung |
| 3 | Zylinder |
| 4 | Abgasleitung |
| 5 | Ladeluftkühler |
| 6 | erster Abgasturbolader, Niederdruckstufe |
| 6a | erste Turbine |
| 6b | erster Verdichter |
| 7 | zweiter Abgasturbolader, Hochdruckstufe |
| 7a | zweite Turbine |
| 7b | zweiter Verdichter |
| 8 | Abgasrückführung |
| 9 | Leitung zur Abgasrückführung |
| 10 | Kühler |
| 11 | Absperrelement |
| 12 | erste Bypaßleitung |
| 13 | Absperrelement |
| 14 | zweite Bypaßleitung |
| 15 | Absperrelement |
| 16 | dritte Bypaßleitung |
| 17 | Absperrelement |
| 18 | Bypaßleitung |
| 19 | Absperrelement |

| AGR | Abgasrückführung |
|---|---|
| $m_{AGR}$ | Masse an zurückgeführtem Abgas |
| $m_{Frischluft}$ | Masse an zugeführter Frischluft bzw. Verbrennungsluft |
| VTG | variable Turbinengeometrie |
| VVG | variable Verdichtergeometrie |
| $X_{AGR}$ | Abgasrückführrate |

**Patentansprüche**

1. Aufgeladene Brennkraftmaschine (1) mit einer Gesamtansaugleitung (2) zur Versorgung mit Frischluft bzw. Frischgemisch und einer Gesamtabgasleitung (4) zur Abführung des Abgases und mit mindestens zwei in Reihe geschalteten Abgasturboladern (6,7), die jeweils eine in der Gesamtabgasleitung (4) angeordnete Turbine (6a,7a) und einen in der Gesamtansaugleitung (2) angeordneten Verdichter (6b,7b) umfassen und von denen ein erster Abgasturbolader (6) als Niederdruckstufe (6) dient und ein zweiter stromaufwärts der Gesamtabgasleitung (4) bzw. stromabwärts der Gesamtansaugleitung (2) des ersten Abgasturboladers (6) angeordneter Abgasturbolader (7) als Hochdruckstufe (7) dient, wobei

- die zweite Turbine (7a) des zweiten Abgasturboladers (7) eine variable Turbinengeometrie aufweist
- eine erste Bypaßleitung (12) vorgesehen ist, in der ein Absperrelement (13) angeordnet ist und die stromaufwärts dieser zweiten Turbine (7a) von der Gesamtabgasleitung (4) abzweigt und stromabwärts dieser zweiten Turbine (7a) wieder in die Gesamtabgasleitung (4) mündet, und
- eine zweite Bypaßleitung (14) vorgesehen ist, die stromaufwärts des zweiten Verdichters (7b) von der Gesamtansaugleitung (2) abzweigt und stromabwärts dieses zweiten Verdichters (7b) wieder in die Gesamtansaugleitung (2) mündet, wobei in dieser zweiten Bypaßleitung (14) ein Absperrelement (15) angeordnet ist,

**dadurch gekennzeichnet, daß**

- eine Abgasrückführung (8) vorgesehen ist, welche eine Leitung (9) umfaßt, die stromaufwärts der beiden Turbinen (6a,7a) aus der Gesamtabgasleitung (4) abzweigt und in die Gesamtansaugleitung (2) mündet, und
- in der Leitung (9) zur Abgasrückführung (8) ein zusätzlicher Kühler (10) vorgesehen ist.

2. Aufgeladene Brennkraftmaschine (1) nach Anspruch 1,
   **dadurch gekennzeichnet, daß**
   der erste Verdichter (6b) größer ausgelegt ist als der zweite Verdichter (7b).

3. Aufgeladene Brennkraftmaschine (1) nach Anspruch 1 oder 2,
   **dadurch gekennzeichnet, daß**
   die erste Turbine (6a) größer ausgelegt ist als die zweite Turbine (7a).

4. Aufgeladene Brennkraftmaschine (1) nach einem der vorherigen Ansprüche,
   **dadurch gekennzeichnet, daß**
   das Absperrelement (13) in der ersten Bypaßleitung (12) ein Ventil ist.

5. Aufgeladene Brennkraftmaschine (1) nach einem der Ansprüche 1 bis 3,
   **dadurch gekennzeichnet, daß**
   das Absperrelement (13) in der ersten Bypaßleitung (12) eine Drosselklappe ist.

6. Aufgeladene Brennkraftmaschine (1) nach einem der vorherigen Ansprüche,
**dadurch gekennzeichnet, daß**
der zweite Verdichter (7b) eine variable Verdichtergeometrie aufweist.

7. Aufgeladene Brennkraftmaschine (1) nach einem der Ansprüche 1 bis 5,
   **dadurch gekennzeichnet, daß**
   der zweite Verdichter (7b) eine feste, nicht veränderbare Verdichtergeometrie aufweist.

8. Aufgeladene Brennkraftmaschine (1) nach einem der vorherigen Ansprüche,
   **dadurch gekennzeichnet, daß**
   zum Zwecke der Abgasabblasung eine dritte Bypaßleitung (16) vorgesehen ist, die stromaufwärts der ersten Turbine (6a) von der Gesamtabgasleitung (4) abzweigt und stromabwärts dieser ersten Turbine (6a) wieder in die Gesamtabgasleitung (4) einmündet, wobei zur Steuerung der Abgasabblasung ein Absperrelement (17) in der dritten Bypaßleitung (16) vorgesehen ist.

9. Aufgeladene Brennkraftmaschine (1) nach einem der vorherigen Ansprüche,
   **dadurch gekennzeichnet, daß**
   die erste Turbine (6a) eine variable Turbinengeometrie aufweist.

10. Aufgeladene Brennkraftmaschine (1) nach einem der Ansprüche 1 bis 8,
    **dadurch gekennzeichnet, daß**
    die erste Turbine (6a) eine feste, nicht veränderbare Turbinengeometrie aufweist.

11. Aufgeladene Brennkraftmaschine (1) nach einem der vorherigen Ansprüche,
    **dadurch gekennzeichnet, daß**
    der erste Verdichter (6b) mit einer Bypaßleitung (18) ausgestattet ist, die stromabwärts des ersten Verdichters (6b) aus der Gesamtansaugleitung (2) abzweigt.

12. Aufgeladene Brennkraftmaschine (1) nach einem der vorherigen Ansprüche,
    **dadurch gekennzeichnet, daß**
    der erste Verdichter (6b) eine feste, nicht veränderbare Verdichtergeometrie aufweist.

13. Aufgeladene Brennkraftmaschine (1) nach einem der Ansprüche 1 bis 11,
    **dadurch gekennzeichnet, daß**
    der erste Verdichter (6b) eine variable Verdichtergeometrie aufweist.

14. Aufgeladene Brennkraftmaschine (1) nach einem der vorherigen Ansprüche,
    **dadurch gekennzeichnet, daß**

stromabwärts der Verdichter (6b,7b) ein Ladeluftkühler (5) in der Gesamtansaugleitung (2) angeordnet ist.

**15.** Aufgeladene Brennkraftmaschine (1) nach Anspruch 14,
**dadurch gekennzeichnet, daß**
die Leitung (9) zur Abgasrückführung (8) stromabwärts des Ladeluftkühlers (5) in die Gesamtansaugleitung (2) mündet.

**16.** Aufgeladene Brennkraftmaschine (1) nach einem der vorherigen Ansprüche,
**dadurch gekennzeichnet, daß**
in der Leitung (9) zur Abgasrückführung (8) ein Absperrelement (11) vorgesehen ist.

**17.** Verfahren zum Betreiben einer aufgeladenen Brennkraftmaschine (1) nach Anspruch 1,
**dadurch gekennzeichnet, daß**

▪ bei niedrigen Lasten d. h. im unteren Teillastbereich bzw. bei kleinen Abgasmengen der überwiegende Anteil des Abgasstromes durch die zweite Turbine (7a) des zweiten Abgasturboladers (7) geleitet wird.

**18.** Verfahren zum Betreiben einer aufgeladenen Brennkraftmaschine (1) nach Anspruch 17,
**dadurch gekennzeichnet, daß**

▪ bei niedrigen Lasten d. h. im unteren Teillastbereich bzw. bei kleinen Abgasmengen der Abgasstrom vollständig durch die zweite Turbine (7a) des zweiten Abgasturboladers (7) geleitet wird.

**19.** Verfahren nach Anspruch 17 oder 18,
**dadurch gekennzeichnet, daß**
mit zunehmender Drehzahl und/oder zunehmender Last ein zunehmender Anteil des Abgasstromes über die erste Bypaßleitung (12) geleitet wird.

**20.** Verfahren nach einem der Ansprüche 17 bis 19,
**dadurch gekennzeichnet, daß**
bei Lasten, die mehr als 70% der Vollast betragen, mehr als 80% des Abgasstromes über die erste Bypaßleitung (12) geleitet wird.

**21.** Verfahren nach einem der Ansprüche 17 bis 20,
**dadurch gekennzeichnet, daß**
beim Betrieb der Brennkraftmaschine (1) immer ein Teil des Abgasstromes durch die zweite Turbine (7a) des zweiten Abgasturboladers (7) geleitet wird.

**22.** Verfahren nach einem der Ansprüche 17 bis 21 zum Betreiben einer aufgeladenen Brennkraftmaschine (1) nach einem der Ansprüche 1 bis 16,

**dadurch gekennzeichnet, daß**
das in der zweiten Bypaßleitung (14) angeordnete Absperrelement (15) in Abhängigkeit von der Stellposition des in der ersten Bypaßleitung (12) angeordneten Absperrelements (13) gesteuert wird, so daß der durch den zweiten Verdichter (7b) des zwei-ten Abgasturboladers (7) geführte Verdichtermas-senstrom dem durch die zweite Turbine (7a) dieses Abgasturboladers (7) geführten Abgasmassenstrom angepaßt wird.

**23.** Verfahren nach einem der Ansprüche 17 bis 22 zum Betreiben einer aufgeladenen Brennkraftmaschine (1) nach einem der Ansprüche 8 bis 16,
**dadurch gekennzeichnet, daß**
mit zunehmender Last ein zunehmender Anteil des Abgasmassenstromes mittels der dritten Bypaßleitung (16) abgeblasen wird.

**Claims**

**1.** Supercharged internal combustion engine (1) having an inlet manifold (2) for supplying fresh air and/or fresh mixture and an exhaust manifold (4) for leading off the exhaust gas, and having at least two exhaust-gas turbochargers (6, 7) connected in series, which each comprise a turbine (6a, 7a) arranged in the exhaust manifold (4) and a compressor (6b, 7b) arranged in the inlet manifold (2) and of which a first exhaust-gas turbocharger (6) serves as low-pressure stage (6) and a second exhaust-gas turbocharger (7) arranged upstream of the exhaust manifold (4) and downstream of the inlet manifold (2) of the first exhaust-gas turbocharger (6) serves as high-pressure stage (7),

• the second turbine (7a) of the second exhaust-gas turbocharger (7) having a variable turbine geometry
• a first bypass line (12) being provided, in which a shut-off element (13) is arranged and which branches off from the exhaust manifold (4) upstream of this second turbine (7a) and opens back into the exhaust manifold (4) downstream of this second turbine (7a), and
• a second bypass line (14) being provided, which branches off from the inlet manifold (2) upstream of the second compressor (7b) and opens back into the inlet manifold (2) downstream of this second compressor (7b), a shut-off element (15) being arranged in this second bypass line (14),

**characterized in that**

• an exhaust gas recirculation (8) is provided, which comprises a line (9), which branches off from the exhaust manifold (4) upstream of the two turbines (6a, 7a) and opens into the inlet manifold (2)
• an additional cooler (10) is provided in the line (9) for the exhaust gas recirculation (8).

**2.** Supercharged internal combustion engine (1) according to Claim 1, **characterized in that** the first compressor (6b) is larger than the second compressor (7b).

**3.** Supercharged internal combustion engine (1) according to Claim 1 or 2, **characterized in that** the first turbine (6a) is larger than the second turbine (7a).

**4.** Supercharged internal combustion engine (1) according to one of the preceding claims, **characterized in that** the shut-off element (13) in the first bypass line (12) is a valve.

**5.** Supercharged internal combustion engine (1) according to one of Claims 1 to 3, **characterized in that** the shut-off element (13) in the first bypass line (12) is a throttle valve.

**6.** Supercharged internal combustion engine (1) according to one of the preceding claims, **characterized in that** the second compressor (7b) has a variable compressor geometry.

**7.** Supercharged internal combustion engine (1) according to one of Claims 1 to 5, **characterized in that** the second compressor (7b) has a fixed, invariable compressor geometry.

**8.** Supercharged internal combustion engine (1) according to one of the preceding claims, **characterized in that** for the purpose of exhaust gas release, a third bypass line (16) is provided, which branches off from the exhaust manifold (4) upstream of the first turbine (6a) and opens back into the exhaust manifold (4) downstream of this first turbine (6a), a shut-off element (17) being provided in the third bypass line (16) for controlling the exhaust gas release.

**9.** Supercharged internal combustion engine (1) according to one of the preceding claims, **characterized in that** the first turbine (6a) has a variable turbine geometry.

**10.** Supercharged internal combustion engine (1) according to one of Claims 1 to 8, **characterized in that** the first turbine (6a) has a fixed, invariable turbine geometry.

**11.** Supercharged internal combustion engine (1) according to one of the preceding claims, **character-**

**ized in that** the first compressor (6b) is equipped with a bypass line (18), which branches off from the inlet manifold (2) downstream of the first compressor (6b).

**12.** Supercharged internal combustion engine (1) according to one of the preceding claims, **characterized in that** the first compressor (6b) has a fixed, invariable compressor geometry.

**13.** Supercharged internal combustion engine (1) according to one of Claims 1 to 11, **characterized in that** the first compressor (6b) has a variable compressor geometry.

**14.** Supercharged internal combustion engine (1) according to one of the preceding claims, **characterized in that** an air intercooler (5) is arranged in the inlet manifold (2) downstream of the compressors (6b, 7b).

**15.** Supercharged internal combustion engine (1) according to Claim 14, **characterized in that** the line (9) for the exhaust gas recirculation (8) opens into the inlet manifold (2) downstream of the air intercooler (5).

**16.** Supercharged internal combustion engine (1) according to one of the preceding claims, **characterized in that** a shut-off element (11) is provided in the line (9) for the exhaust gas recirculation (8).

**17.** Method for the operation of a supercharged internal combustion engine (1) according to Claim 1, **characterized in that**

• at low loads, that is to say in the lower partial load range or in the case of small exhaust gas quantities the greater proportion of the exhaust gas flow is led through the second turbine (7a) of the second exhaust-gas turbocharger (7).

**18.** Method for the operation of a supercharged internal combustion engine (1) according to Claim 17, **characterized in that**

• at low loads, that is to say in the lower partial load range or in the case of small exhaust gas quantities the entire exhaust gas flow is led through the second turbine (7a) of the second exhaust-gas turbocharger (7).

**19.** Method according to Claim 17 or 18, **characterized in that** as the engine speed and/or the load increases an increasing proportion of the exhaust gas flow is led via the first bypass line (12).

**20.** Method according to one of Claims 17 to 19, **char-**

**acterized in that** at loads exceeding 70% of the full load, more than 80% of the exhaust gas flow is led via the first bypass line (12).

21. Method according to one of Claims 17 to 20, **characterized in that** in the operation of the internal combustion engine (1) a part of the exhaust gas flow is always led through the second turbine (7a) of the second exhaust-gas turbocharger (7).

22. Method according to one of Claims 17 to 21 for the operation of a supercharged internal combustion engine (1) according to one of Claims 1 to 16, **characterized in that** the shut-off element (15) arranged in the second bypass line (1) is controlled as a function of the set position of the shut-off element (13) arranged in the first bypass line (12), so that the compressor mass flow fed through the second compressor (7b) of the second exhaust-gas turbocharger (7) is adjusted to the exhaust gas mass flow fed through the second turbine (7a) of this exhaust-gas turbocharger (7).

23. Method according to one of Claims 17 to 22 for the operation of a supercharged internal combustion engine (1) according to one of Claims 8 to 16, **characterized in that** as the load increases an increasing proportion of the exhaust gas mass flow is released by means of the third bypass line (16).

**Revendications**

1. Moteur à combustion interne (1) à suralimentation, comprenant une conduite d'aspiration totale (2) pour l'alimentation en air frais ou en mélange frais, et une conduite de gaz d'échappement totale (4) pour l'évacuation des gaz d'échappement, et comprenant au moins deux turbosoufflantes à gaz d'échappement (6, 7) montées en série, qui comprennent chacune une turbine (6a, 7a) disposée dans la conduite de gaz d'échappement totale (4) et un compresseur (6b, 7b) disposé dans la conduite d'aspiration totale (2), et dont une première turbosoufflante à gaz d'échappement (6) sert d'étage basse pression (6) et une deuxième turbosoufflante à gaz d'échappement (7) disposée en amont de la conduite de gaz d'échappement totale (4) ou en aval de la conduite d'aspiration totale (2) de la première turbosoufflante à gaz d'échappement (6) sert d'étage haute pression (7),

- la deuxième turbine (7a) de la deuxième turbosoufflante à gaz d'échappement (7) présentant une géométrie de turbine variable,
- une première conduite de dérivation (12) étant prévue, dans laquelle un élément d'arrêt (13) est disposé et qui part de la conduite de gaz d'échappement totale (4) en amont de cette deuxième turbine (7a) et qui débouche en aval de cette deuxième turbine (7a) à nouveau dans la conduite de gaz d'échappement totale (4), et
- une deuxième conduite de dérivation (14) étant prévue, laquelle part en amont du deuxième compresseur (7b) depuis la conduite d'aspiration totale (2) et débouche en aval de ce deuxième compresseur (7b) à nouveau dans la conduite d'aspiration totale (2), un élément d'arrêt (15) étant disposé dans cette deuxième conduite de dérivation (14),

**caractérisé en ce que**

- l'on prévoit une recirculation de gaz d'échappement (8) qui comprend une conduite (9) qui part en amont des deux turbines (6a, 7a) depuis la conduite de gaz d'échappement totale (4) et qui débouche dans la conduite d'aspiration totale (2)
- l'on prévoit dans la conduite (9) pour la recirculation des gaz d'échappement (8) un refroidisseur supplémentaire (10).

2. Moteur à combustion interne (1) à suralimentation selon la revendication 1, **caractérisé en ce que** le premier compresseur (6b) est plus gros que le deuxième compresseur (7b).

3. Moteur à combustion interne (1) à suralimentation selon la revendication 1 ou 2, **caractérisé en ce que** la première turbine (6a) est plus grosse que la deuxième turbine (7a).

4. Moteur à combustion interne (1) à suralimentation selon l'une quelconque des revendications précédentes, **caractérisé en ce que** l'élément d'arrêt (13) dans la première conduite de dérivation (12) est une soupape.

5. Moteur à combustion interne (1) à suralimentation selon l'une quelconque des revendications 1 à 3, **caractérisé en ce que** l'élément d'arrêt (13) dans la première conduite de dérivation (12) est un papillon.

6. Moteur à combustion interne (1) à suralimentation selon l'une quelconque des revendications précédentes, **caractérisé en ce que** le deuxième compresseur (7b) présente une géométrie de compresseur variable.

7. Moteur à combustion interne (1) à suralimentation selon l'une quelconque des revendications 1 à 5,

**caractérisé en ce que**
le deuxième compresseur (7b) présente une géométrie de compresseur fixe non variable.

8. Moteur à combustion interne (1) à suralimentation selon l'une quelconque des revendications précédentes,
**caractérisé en ce que**
pour le soufflage des gaz d'échappement, on prévoit une troisième conduite de dérivation (16), qui part en amont de la première turbine (6a) depuis la conduite de gaz d'échappement totale (4) et qui débouche en aval de cette première turbine (6a) à nouveau dans la conduite de gaz d'échappement totale (4), un élément d'arrêt (17) étant prévu dans la troisième conduite de dérivation (16) pour commander le soufflage des gaz d'échappement.

9. Moteur à combustion interne (1) à suralimentation selon l'une quelconque des revendications précédentes,
**caractérisé en ce que**
la première turbine (6a) présente une géométrie de turbine variable.

10. Moteur à combustion interne (1) à suralimentation selon l'une quelconque des revendications 1 à 8,
**caractérisé en ce que**
la première turbine (6a) présente une géométrie de turbine fixe non variable.

11. Moteur à combustion interne (1) à suralimentation selon l'une quelconque des revendications précédentes,
**caractérisé en ce que**
le premier compresseur (6b) est muni d'une conduite de dérivation (18) qui part en amont du premier compresseur (6b) depuis la conduite d'aspiration totale (2).

12. Moteur à combustion interne (1) à suralimentation selon l'une quelconque des revendications précédentes,
**caractérisé en ce que**
le premier compresseur (6b) présente une géométrie de compresseur fixe, non variable.

13. Moteur à combustion interne (1) à suralimentation selon l'une quelconque des revendications 1 à 11,
**caractérisé en ce que**
le premier compresseur (6b) présente une géométrie de compresseur variable.

14. Moteur à combustion interne (1) à suralimentation selon l'une quelconque des revendications précédentes,
**caractérisé en ce que**
l'on dispose en aval des compresseurs (6b, 7b) un refroidisseur d'air de charge (5) dans la conduite d'aspiration totale (2).

15. Moteur à combustion interne (1) à suralimentation selon la revendication 14,
**caractérisé en ce que**
la conduite (9) pour la recirculation des gaz d'échappement (8) débouche en aval du refroidisseur d'air de charge (5) dans la conduite d'aspiration totale (2).

16. Moteur à combustion interne (1) à suralimentation selon l'une quelconque des revendications précédentes,
**caractérisé en ce que**
l'on prévoit dans la conduite (9) pour la recirculation des gaz d'échappement (8) un élément d'arrêt (11).

17. Procédé pour faire fonctionner un moteur à combustion interne (1) à suralimentation selon la revendication 1,
**caractérisé en ce que**

- pour de faibles charges, c'est-à-dire dans la plage des charges partielles inférieure ou pour de petites quantités de gaz d'échappement, la majeure partie du flux de gaz d'échappement est guidée à travers la deuxième turbine (7a) de la deuxième turbosoufflante à gaz d'échappement (7).

18. Procédé pour faire fonctionner un moteur à combustion interne (1) à suralimentation selon la revendication 17,
**caractérisé en ce que**

- pour de faibles charges, c'est-à-dire dans la plage de charges partielles inférieure ou pour de petites quantités de gaz d'échappement, le flux de gaz d'échappement est guidé complètement à travers la deuxième turbine (7a) de la deuxième turbosoufflante à gaz d'échappement (7).

19. Procédé selon la revendication 17 ou 18,
**caractérisé en ce**
**qu'**une proportion croissante du flux de gaz d'échappement est guidée par le biais de la première conduite de dérivation (12) au fur et à mesure de l'augmentation du régime et/ou de la charge.

20. Procédé selon l'une quelconque des revendications 17 à 19,
**caractérisé en ce que**
plus de 80 % du flux de gaz d'échappement sont guidés par le biais de la première conduite de dérivation (12) pour des charges qui représentent plus de 70 % de la charge maximale.

**21.** Procédé selon l'une quelconque des revendications 17 à 20,

**caractérisé en ce que**

lors du fonctionnement du moteur à combustion interne (1), une partie du flux de gaz d'échappement est toujours guidée à travers la deuxième turbine (7a) de la deuxième turbosoufflante à gaz d'échappement (7).

**22.** Procédé selon l'une quelconque des revendications 17 à 21, pour faire fonctionner un moteur à combustion interne (1) à suralimentation selon l'une quelconque des revendications 1 à 16,

**caractérisé en ce que**

l'élément d'arrêt (15) disposé dans la deuxième conduite de dérivation (14) est commandé en fonction de la position de réglage de l'élément d'arrêt (13) disposé dans la première conduite de dérivation (12), de sorte que le débit massique du compresseur guidé à travers le deuxième compresseur (7b) de la deuxième turbosoufflante à gaz d'échappement (7) est adapté au débit massique de gaz d'échappement guidé à travers la deuxième turbine (7a) de cette turbosoufflante à gaz d'échappement (7).

**23.** Procédé selon l'une quelconque des revendications 17 à 22 pour faire fonctionner un moteur à combustion interne (1) à suralimentation selon l'une quelconque des revendications 8 à 16,

**caractérisé en ce**

**qu'**une proportion croissante du débit massique de gaz d'échappement est soufflée au moyen de la troisième conduite de dérivation (16) au fur et à mesure de l'augmentation de la charge.

Fig.1

EP 1 640 596 B2

Fig.2

EP 1 640 596 B2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1396619 A1
- US 20020112478 A1
- EP 1375868 A1